# EUROPEAN PATENT SPECIFICATION

(11) **EP 0 784 920 B1**
(45) Date of publication and mention of the grant of the patent: **28.11.2001**
(21) Application number: 97200049.1
(22) Date of filing: 09.01.1997
(51) Int. Cl.: A01D 78/10

(54) **An agricultural machine**
Landwirtschaftliche Maschine
Machine agricole

(30) Priority: 22.01.1996 NL 1002141
(43) Date of publication of application: 23.07.1997
(73) Proprietor: MAASLAND N.V., 3155 PD Maasland (NL)
(72) Inventor: van den Engel, Alfonsus Jacobus, 3137 KC Vlaardingen (NL); Koorn, Maarten, 3123 CP Schiedam (NL)
(74) Representative: Corten, Maurice Jean F.M.

(56) References cited:
- EP-A- 0 291 810
- EP-A- 0 300 937
- EP-A- 0 429 433
- EP-A- 0 454 602
- EP-A- 0 526 365
- EP-A- 0 551 948
- DE-A- 3 831 186
- DE-A- 4 026 032
- DE-U- 8 803 365
- GB-A- 2 057 239
- US-A- 4 512 416

## Description

The present invention relates to an agricultural machine as defined in the preamble of claim 1.

Such a machine is known from US-A-4,512,416. Herein an agricultural machine is described having a frame comprising a first central frame part and a second and third outer frame part situated on opposite sides of the first central frame part. Each outer frame part is pivotably connected to the first central frame part, by means of an operating element consisting of a cylinder and a piston rod. In addition an elastic element is provided operating between the frame and the operating element.

The present invention aims at providing an alternative machine having a construction ensuring that upon pivoting downwards of the frame parts from a transport position, the connecting element will at least almost maintain its position.

In accordance with the invention this is achieved by applying the construction as described in the characterizing part of claim 1.

Such a construction enables to avoid intermittent loads under tipping of the machine, which can occur either from a topmost stop position to an undermost stop position of the relevant frame part, or from a topmost stop position to a position in which said frame part is stopped by the bottom, and to have the constructive freedom to apply in the machine, at least in the operating member thereof, standard components, the proper function of the machine being preserved.

In accordance with a preferred embodiment, the elastic element is constituted by a spring element, more in particular by a tension spring and is disposed so as to be active between the second frame part and the operating member. Such an embodiment has the advantage that the force generated by the elastic element acts on the machine only via one pivot connection and results in the described construction in that, at activating the operating member, the third frame part is pivoted upwards in sequence before the second frame part. This effect is in particular important during the lifted operative position of the machine on the headland. In the shown construction, a short activation of the operating element results in that the third frame part is pivoted upwardly. This prevents the third frame part and further frame parts that might be coupled thereto from bending downwardly to a considerable extent relative to the first frame part lifted by the lifting hitch of a tractor, before a downward movement of a frame part is limited by a stop. Such a situation results in that the machine, in this place, already when meeting a small unevenness in the field, may come into contact with the ground and may be dislocated or otherwise be damaged. During driving on the headland, contact with the ground of a most outwardly situated part of the machine may cause greater damage than contact with the ground of a centrally situated part of the machine.

In particular when on both sides of the first frame part there are disposed further frame parts, such a construction enables to operate the further frame parts by means of only one adjusting element. Furthermore, the entire length of the allowed free strokes, e.g. of the slotted holes, applied in the machine can be reduced, because upon pivoting one frame part for following an unevenness in the ground all the slotted holes present in the machine can be utilized. It is noticed hereby that the risk that two outer frame parts, when following unevennesses in the ground, will pivot simultaneously in opposite direction is small in practice. A suchlike construction also allows the machine to be used by means of less advanced or less expensive tractors which lack the possibility of bringing the hydraulics in such an idle mode that the adjusting element, when constituted by a hydraulic cylinder, is freely variable in length under the influence of forces originating from the frame during operation.

Furthermore, in accordance with the invention, in the operative position of the machine, the spring element is substantially active in the longitudinal direction of the frame. Such an arrangement avoids that there is transferred weight from one frame part to the other.

For a better understanding of the present invention and to show how the same may be carried into effect, reference will now be made, by way of example, to the accompanying drawings, in which:
Figure 1 is a rear view of a haymaking machine according to the invention, shown in the transport position;
Figure 2 is a rear view of part of the machine, shown in an operative position, the dash lines representing the transport position, and
Figure 3 is a plan view according to the arrow III in Figure 2;

In the drawings, corresponding parts have been indicated by the same reference numerals. Furthermore, the invention is by no means restricted to the embodiments shown and described here; they only serve to illustrate the inventive idea.

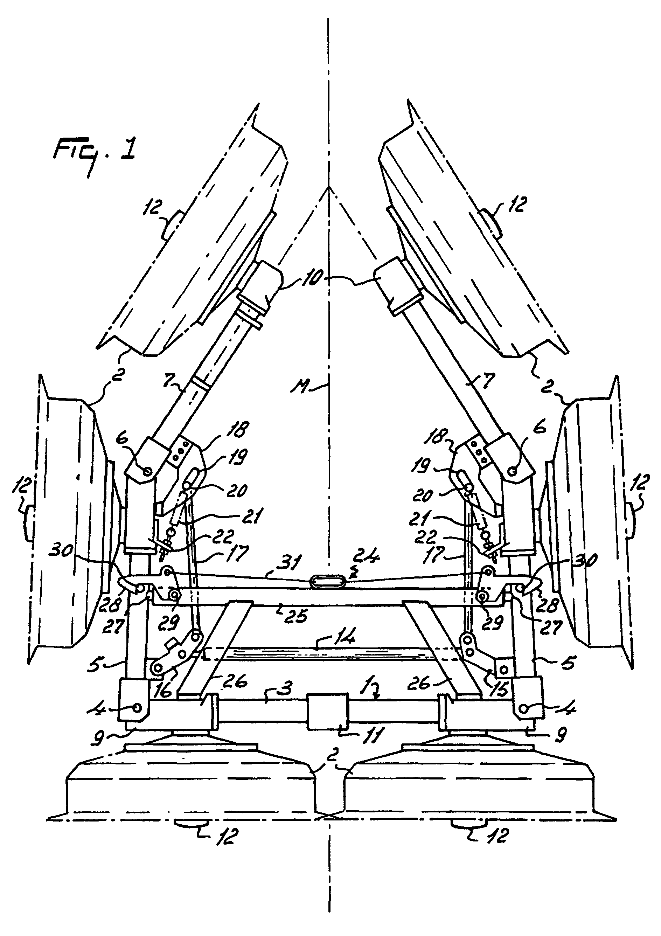

Figure 1 is a rear view of a haymaking machine, more in particular a hay tedder. The machine includes an elongated frame 1, in which working members 2, in this case tedding members, are bearing-supported pivotably about upwardly oriented rotary shafts. The frame 1 comprises a central frame part 3 including two working members 2 and, near the ends thereof, lateral frame parts, each of which is connected with the central frame part 3 via a pivot shaft 4 mounted transversely to the frame 1 and substantially in the direction of travel A. Each of the lateral frame parts, also called wings, consists of at least one intermediate frame part 5 and a frame part 7 which, relative to an imaginary centre plane M extending vertically and in the direction of travel, is an outer frame part. An outer frame part 7 is connected with an intermediate frame part 5 via a pivot shaft 6 disposed parallel to the pivot shaft 4. In accordance with the invention, in an analogous manner a plurality of intermediate frame parts 5 may be arranged between an outer frame part 7 and the central frame part 3. Therefore the central frame part may also be denoted as a first frame part, whereby the intermediate frame part constitutes a second frame part, and the frame part being the outer frame part in the present embodiment, constitutes a third frame part. Each of the frame parts 3, 5, 7, is freely movable upwards and downwards to a limited extent relative to a nearby frame part for the purpose of following unevennesses in the ground during operation. To that end, for restricting the freedom of movement in downward direction, there are provided stops 8. Near the outer end of a frame part 3, 5, 7, in a manner known per se, a working member 2 is bearing-supported in a housing 9 or a housing 10 constituting part of the relevant frame part. In a housing 9 or 10 there is a transmission at right angles of a driving shaft extending through the frame 1, which driving shaft is also locally pivotable and can be driven from the tractor via a centrally arranged gearbox 11. Each of the working members 2 comprises a supporting wheel 12 by means of which the working member 2 and the relevant frame part bear on the ground during operation.

The machine is provided with an operating element 14, here constituted by a hydraulic cylinder, extending at some distance above the frame part 3 and substantially parallel thereto. One end of said operating element 14 is pivotably connected with an arm 15, which is also pivotably connected with an intermediate frame part 5, and the other end is also pivotably connected with an arm 16, which is pivotably connected in an analogous manner with the opposite intermediate part 5. All the pivoting movements in this connection take place about pivot shafts disposed parallel to the pivot shafts 4 and 6. A push and pull rod 17, one end of which is pivotably connected with an arm 15, 16, respectively and the other end of which is connected with a platelike support 18, disposed on an outer frame part 7, extends substantially parallel to an intermediate frame part 5. The operating element 14, the pivot arms 15 and 16 and the push and pull rod 17 form together an operating member for pivoting the lateral frame parts relative to each other. A support 18 extends over the pivot shaft 6 between an outer frame part 7 and the relevant intermediate frame part 5. In the support 18 there is provided a slotted hole 19 extending horizontally in the operative position, in which slotted hole 19 there is also movable a connecting element 20 formed by an end part bent at right angles of the push and pull rod 17, which connecting element 20 also constitutes a pivot shaft. To the free end of the support 18 there is fitted a stop 23, covered with rubber in this case, which stop 23 limits the upward freedom of movement of a frame part 7 relative to the nearby intermediate frame part 5.

Between the connecting element 20 and the intermediate frame part 5 connected with the relevant outer frame part 7, there is disposed an elastic element 21 constituted by a tension spring. In the present embodiment, to that end a lug 22 is provided on the intermediate frame part 5 and the spring 21 is adjustably mounted by means of a connecting element 34 adjustable in length and relative to the lug 22. In the present embodiment the connecting element 34 comprises an eye, in which the spring 21 is caught, and a screwed part which is adjustable relative to the lug 22 by means of a nut 35 and a locknut 35.

One of the two push and pull rods 17 is pivotably connected with the arm 16 in such a way that the distance from the pivot shaft of this connection to the shaft of the pivot point between the arm 16 and the relevant intermediate frame part 5 is approximately twice the similar distance between the relevant push and pull rod 17 and the operating element 14. Near its other end the operating element 14 is connected with the arm 15 at a point where the distance from the pivot shaft of the relevant push and pull rod 17 to the pivot shaft between the arm 15 and the relevant intermediate frame part 5 is approximately four times the distance between the local pivot shaft of the push and pull rod 17 and the pivot shaft between the operating element 14 and the arm 15.

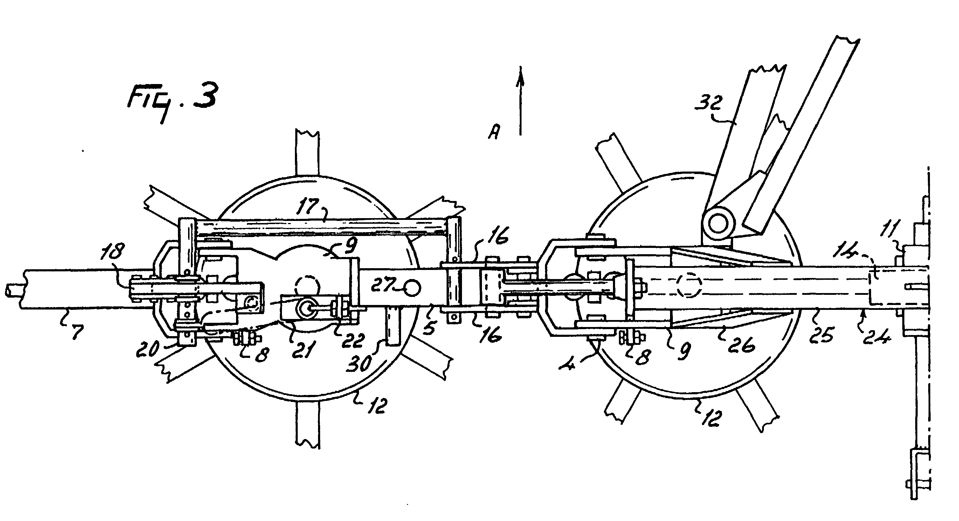

The central frame part 3 is additionally provided with a superstructure 24 consisting of an upper crossbeam 25 which is connected with the central frame part 3 via two pairs of struts 26. Near both ends of the crossbeam 25 there is provided a fitting opening containing, in the transport position, a pin 27 fitted on a relevant intermediate frame part 5. In this situation the pin 27 abuts, at least with its sides which, relative to the direction of travel A, are the front and rear side, against an edge portion of the opening in the end of the crossbeam. In the transport position the intermediate frame part 5 is supported against a stop 36 of the superstructure 24. Furthermore, a locking element 28, capable of being operated via a cord 31 from the driver's seat and pivotable about a shaft 29, is fitted to an end of the crossbeam 25. For the purpose of locking the transport position of the machine, said element 28 engages a pin 30 of the relevant intermediate frame part 5. The central frame part, which is partially shown in Figure 3, can be coupled with the lifting hitch of a tractor via a trestle 32. As far as not otherwise indicated in the present description, the machine comprises furthermore the construction elements mentioned in Dutch patent application 9401502 and functions as described therein. The machine shown in said patent application also constitutes a basis for the present construction.

The function of the above-described construction will be explained in what follows.

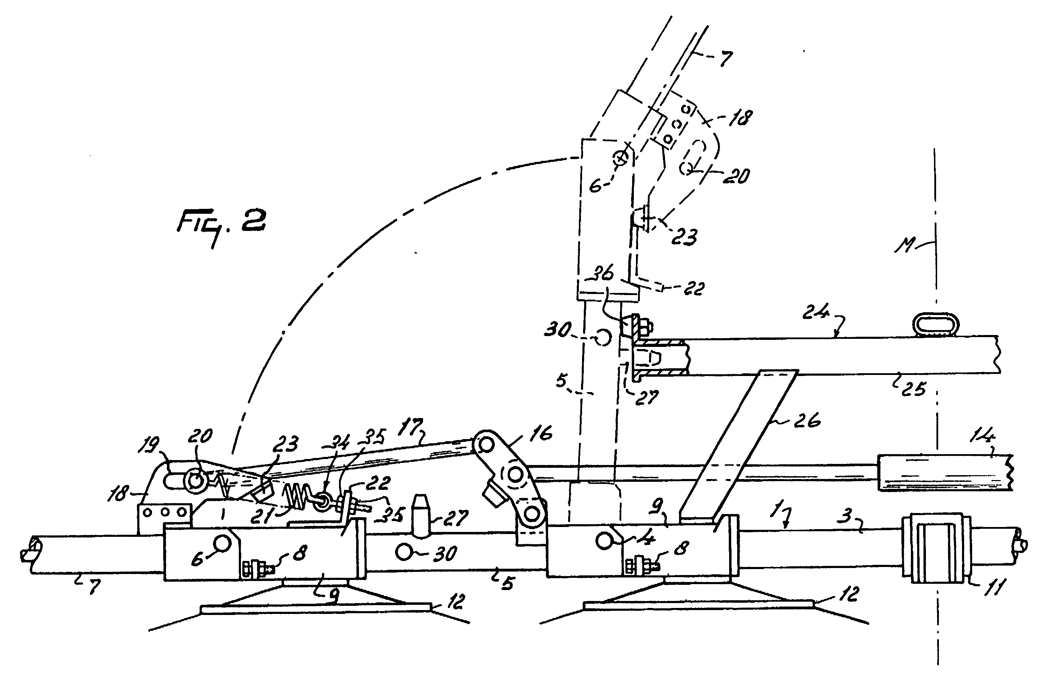

During operation the frame 1 of the machine is arranged in an elongated position, as shown in Figures 2 and 3. The operating element 14 is preferably put into a free mode so that, although meeting with some resistance, inter alia internal resistance, in the present case the flow resistance of oil in a hydraulic circuit, said operating element 14 is adjustable in length. Due to this, during pivoting the respective frame parts 5 and 7 about a relevant pivot shaft 4 and 6, the working members 2 of the two wings are capable of following the ground surface, i.e. the unevennesses or curves therein. By putting the lifting hitch of the tractor in a so-called floating position, analogous to the free adjustment of the operating element 14, during normal use it is possible for the working member 2 connected with the central frame portion 3 to follow the ground surface. When the machine is used by means of a tractor whose hydraulic system does not allow a free mode of the operating element 14, the arrangement of the latter between two pivotable arms 15, 16 allows to use the freedom of movement of the two slotted holes 19. Due to this the machine still allows a considerable pivotal movement of the lateral frame parts.

If desired, the machine can be lifted, e.g. on the headland of a field, by activating the lifting hitch of the tractor. In this situation, after the frame parts 5 and 7 have come into contact with the relevant stop 8, the frame 1 takes the shape of an arch, whereby the outer end of the machine is closer to the ground surface than one of the two supports 12 connected with the central frame portion 3. In the present machine bending of the frame 1 in this manner can be obviated to some extent by activating the operating element 14 during a short time. Due to the presence of the tension springs 21 the outer frame parts 7 are pivoted upwardly before one of the two intermediate frame parts 5 pivots in upward direction. This sequence is a result of the fact that the spring 21, during activating the operating element 14, influences the outer frame part 7 such that the weight thereof is relieved. Because the tension spring 21 engages the push and pull rod 17 and, in the operative position, is active for the greater part in the direction of the push and pull rod 17, the force to be generated by the operating element 14 for lifting the two outer frame parts 7, together or consecutively, is relatively small in relation to the force required for lifting one of the two wings.

In the transport position the longitudinal axis of an intermediate frame part 5 forms a small angle of some degrees with a vertical, such that the frame part is directed to the imaginary vertical centre plane M of the machine. When the support 18 abuts against the intermediate frame part 5, the respective longitudinal axes of the frame parts 5 and 7 form together an angle of approximately 30°.

The aforementioned effect that, upon activating the operating element 14, due to the function of the tension springs 21, first of all the two outer frame parts 7 pivot upwardly until their boundaries, also occurs when the operating element 14 is fully activated, i.e. until the eventual transport position. After the two outer frame parts 7 have pivoted until their upper boundaries, as a result of seeking the line of least resistance, first the intermediate frame part 5 automatically pivots, whereby the operating element 14 located at the largest distance in vertical direction to the relevant pivot shaft 4, is connected with the relevant intermediate frame part 5. In the present embodiment this is the frame part 5 to which the arm 15, which has the most asymmetric aspect, is connected. By means of this sequence in pivoting to the transport position of the machine realized by the difference between the arms 15 and 16, it is achieved that the operating cylinder 14 can be produced as a relatively light one, because always only the force for lifting only one lateral frame part instead of two lateral frame parts simultaneously has to be generated. It is also achieved that the first lifted wing, before the other one is lifted, is automatically entirely pivoted to its transport position automatically locked by the locking hooks 28. As a result thereof the possibility is excluded that, when both wings have pivoted halfway, i.e. until approximately 45°, the wings unexpectedly tip in such a way that one thereof further pivots to the eventual transport position under the influence of the pivoting movement back to the ground by gravity of the other wing.

During normal use, from the transport position shown in Figure 1, first only one of the two wings, preferably the wing including the arm 16, is unlocked and for achieving the operative position the operating element 14 is activated such that it extends in length so that the unlocked wings are pushed into their operative position. Furthermore, the elastic element 21 ensures that least resistance is encountered in pivoting the frame part 5 about its pivot shaft 4 and that the square part 20 of the push and pull rod 17 is kept against the end of the slotted hole 19 which is situated nearest to the frame part 5. This has the effect that, after the supporting wheel 12 of the frame part 5 has reached the ground surface, the outer frame part 7 subsequently pivots further in a controlled manner. Hereafter the other lateral frame part can be put in its operative position in an analogous manner.

The invention relates to all alternatives in the construction falling within the scope of the following claims.

## Claims

1. An agricultural machine, in particular a hay tedder, having an elongated frame (1), including at least a first, a second and a third frame part (3, 5, 7), the first frame part (3) being pivotally interconnected with the second frame part (5) via a pivot shaft (4), the second frame part (5) being pivotally interconnected with the third frame part (7) via a pivot shaft (6), said pivot shafts being arranged in the direction of travel of the agricultural machine, said second frame part (5) being placed between the first frame part (3) and the third frame part (7), said third frame part (7) being pivotable relative to at least the first frame part (3) by means of an operating member (14, 15, 16, 17) included in the machine substantially in the longitudinal direction of the frame (1), which operating member (14, 15, 16, 17) comprises an operating element (14) which pivotally engages the second frame part (5), said operating member (14, 15, 16, 17) via a connection (19, 20) pivotally engages the third frame part (7) and an elastic element (21) being connected between the frame (1) and the operating member (14, 15, 16, 17), **characterized in that,** the operating member (14 to 17) comprises a push and pull rod (17) which is coupled with the operating element (14) via an arm (15, 16), which is pivotally connected to the second frame part (5), said push and pull rod (17) via the connection (19, 20) pivotally engages the third frame part (7).

2. An agricultural machine as claimed in claim 1, **characterized in that** the frame (1) is provided at both ends of the first frame part (3) with a second (5) and a third (7) frame part.

3. An agricultural machine as claimed in claim 1 or 2, **characterized in that** the operating element (14) extends at some distance above the first frame part (3) and substantially parallel thereto.

4. An agricultural machine as claimed in claim 1, 2 or 3, **characterized in that** one end of the operating element (14) is pivotally connected with an arm (15) which is also pivotally connected with a second frame part (5), and the other end of the operating element (14) is pivotally connected with an arm (16) which is also pivotally connected with the opposite second frame part (5).

5. An agricultural machine as claimed in any one of the preceding claims, **characterized in that** the elastic element (21) is constituted by a tension spring.

6. An agricultural machine as claimed in any one of the preceding claims, **characterized in that** the elastic element (21) is disposed so as to be active between a second frame part (5) and the operating member (14, 15, 16, 17).

7. An agricultural machine as claimed in any one of the preceding claims, **characterized in that** the connection (19, 20) is embodied by a slotted hole (19) and a connecting element (20) passed therethrough.

8. An agricultural machine as claimed in any one of the preceding claims, **characterized in that** each frame part (3, 5, 7) of the machine is provided with at least one tedding member (2) drivable about an upwardly oriented shaft.

9. An agricultural machine as claimed in claim 7, **characterized in that,** by means of a support (18) fitted on the third frame part (1), the slotted hole (19), viewed in longitudinal direction from the frame (1) and from the first frame part (3), is disposed at least substantially beyond the pivot shaft (6) located between the second (5) and the third (7) frame part and at some distance thereabove.

10. An agricultural machine as claimed in any one of the preceding claims, **characterized in that** immediately pivotally interconnected frame parts (3, 5; 5, 7) are pivotable relative to each other by means of stops (8, 23, 36), at least such that, in the transport position of the machine, the frame parts (3 to 5) form at least half of a pentagram.

11. An agricultural machine as claimed in any one of the preceding claims, **characterized in that** the push and pull rod (17) comprises an end part (20), constituting the connecting element, which is bent at right angles to its longitudinal direction, which end part (20) is engaged by the elastic element (21).

12. An agricultural machine as claimed in any one of the preceding claims, **characterized in that** the tension spring (21), at least in the operative position of the machine, has a predominant directional component lying in the longitudinal direction of the push and pull rod (17).

13. An agricultural machine as claimed in any one of the preceding claims, **characterized in that** the elastic element (21) is disposed by means of a connecting element (34), which is adjustable in length.

14. An agricultural machine as claimed in any one of the preceding claims, **characterized in that** the elastic element (21) is included in the machine in such a manner that, in the transport position of the machine, said elastic element (21) has a pretension.

15. An agricultural machine as claimed in any one of the preceding claims, **characterized in that** the tension of the elastic element (21) in the operative position of the machine is greater than its tension in the transport position thereof.

16. An agricultural machine as claimed in any one of the preceding claims, **characterized in that** the two ends of the operating element (14) are connected with a respective push and pull rod (17).

## Patentansprüche

1. Landwirtschaftliche Maschine, insbesondere Zettwender, mit einem langgestreckten Rahmen (1), der mindestens einen ersten, einen zweiten und einen dritten Rahmenteil (3, 5, 7) aufweist, wobei der erste Rahmenteil (3) mit dem zweiten Rahmenteil (5) über eine Schwenkachse (4) schwenkbar verbunden ist, wobei der zweite Rahmenteil (5) mit dem dritten Rahmenteil (7) über eine Schwenkachse (6) schwenkbar verbunden ist, wobei die Schwenkachsen in Arbeitsrichtung der landwirtschaftlichen Maschine angeordnet sind, wobei der zweite Rahmenteil (5) zwischen dem ersten Rahmenteil (3) und dem dritten Rahmenteil (7) angeordnet ist, wobei der dritte Rahmenteil (7) relativ zu mindestens dem ersten Rahmenteil (3) mit Hilfe eines Betätigungsgliedes (14, 15, 16, 17) schwenkbar ist, das in der Maschine im wesentlichen in Längsrichtung des Rahmens (1) angeordnet ist, wobei das Betätigungsglied (14, 15, 16, 17) ein Betätigungselement (14) umfaßt, das mit dem zweiten Rahmenteil (5) schwenkbar verbunden ist, wobei das Betätigungsglied (14, 15, 16, 17) über eine Verbindung (19, 20) schwenkbar mit dem dritten Rahmenteil (7) verbunden ist und ein elastisches Element (21) zwischen dem Rahmen (1) und dem Betätigungsglied (14, 15, 16, 17) angeordnet ist,
**dadurch gekennzeichnet, daß** das Betätigungsglied (14 bis 17) eine Zug- und Druckstange (17) umfaßt, die mit dem Betätigungselement (14) über einen Arm (15, 16) verbunden ist, der mit dem zweiten Rahmenteil (5) schwenkbar verbunden ist, wobei die Zug- und Druckstange (17) über die Verbindung (19, 20) schwenkbar mit dem dritten Rahmenteil (7) verbunden ist.

2. Landwirtschaftliche Maschine nach Anspruch 1,
**dadurch gekennzeichnet, daß** der Rahmen (1) an beiden Enden des ersten Rahmenteiles (3) mit einem zweiten Rahmenteil (5) und einem dritten Rahmenteil (7) versehen ist.

3. Landwirtschaftliche Maschine nach Anspruch 1 oder 2,
**dadurch gekennzeichnet, daß** sich das Betätigungselement (14) in einigem Abstand über dem ersten Rahmenteil (3) und im wesentlichen parallel zu diesem erstreckt.

4. Landwirtschaftliche Maschine nach Anspruch 1, 2 oder 3,
**dadurch gekennzeichnet, daß** das eine Ende des Betätigungselementes (14) schwenkbar mit einem Arm (15) verbunden ist, der auch schwenkbar mit einem zweiten Rahmenteil (5) verbunden ist, und daß das andere Ende des Betätigungselementes (14) schwenkbar mit einem Arm (16) verbunden ist, der auch schwenkbar mit dem gegenüberliegenden zweiten Rahmenteil (5) verbunden ist.

5. Landwirtschaftliche Maschine nach einem der vorhergehenden Ansprüche,
**dadurch gekennzeichnet, daß** das elastische Element (21) durch eine Zugfeder gebildet ist.

6. Landwirtschaftliche Maschine nach einem der vorhergehenden Ansprüche,
**dadurch gekennzeichnet, daß** das elastische Element (21) derart angeordnet ist, daß es zwischen einem zweiten Rahmenteil (5) und dem Betätigungsglied (14, 15, 16, 17) wirksam ist.

7. Landwirtschaftliche Maschine nach einem der vorhergehenden Ansprüche,
**dadurch gekennzeichnet, daß** die Verbindung (19, 20) durch eine schlitzförmige Öffnung (19) und ein in diese eingesetztes Verbindungselement (20) gebildet ist.

8. Landwirtschaftliche Maschine nach einem der vorhergehenden Ansprüche,
**dadurch gekennzeichnet, daß** jeder Rahmenteil (3, 5, 7) der Maschine mit mindestens einem Zettelement (2) versehen ist, das um eine aufwärts gerichtete Achse antreibbar ist.

9. Landwirtschaftliche Maschine nach Anspruch 7,
**dadurch gekennzeichnet, daß** die schlitzförmige Öffnung (19) mittels einer an dem dritten Rahmenteil (1) angebrachten Stütze (18) in Längsrichtung des Rahmens (1) und des ersten Rahmenteiles (3) betrachtet zumindest im wesentlichen jenseits der Schwenkachse (6) liegt, die zwischen dem zweiten Rahmenteil (5) und dem dritten Rahmenteil (7) und in einigem Abstand darüber angeordnet ist.

10. Landwirtschaftliche Maschine nach einem der vorhergehenden Ansprüche,
**dadurch gekennzeichnet, daß** unmittelbar schwenkbar verbundene Rahmenteile (3, 5; 5, 7) relativ zueinander mit Hilfe von Anschlägen (8, 23, 36) schwenkbar sind, zumindest derart, daß die Rahmenteile (3 bis 5) in der Transportlage der Maschine zumindest die Hälfte eines Pentagramms bilden.

11. Landwirtschaftliche Maschine nach einem der vorhergehenden Ansprüche,
**dadurch gekennzeichnet, daß** die Zug- und Druckstange (17) einen das Verbindungselement bildenden Endteil (20) aufweist, der rechtwinklig zu ihrer Längserstreckung umgebogen ist, wobei der Endteil (20) mit dem elastischen Element (21) in Eingriff steht.

12. Landwirtschaftliche Maschine nach einem der vorhergehenden Ansprüche,
**dadurch gekennzeichnet, daß** die Zugfeder (21) zumindest in der Arbeitslage der Maschine eine vorherrschende Richtungskomponente in Längsrichtung der Zug- und Druckstange (17) aufweist.

13. Landwirtschaftliche Maschine nach einem der vorhergehenden Ansprüche,
**dadurch gekennzeichnet, daß** das elastische Element (21) mittels eines Verbindungselementes (34) angebracht ist, das längenverstellbar ist.

14. Landwirtschaftliche Maschine nach einem der vorhergehenden Ansprüche,
**dadurch gekennzeichnet, daß** das elastische Element (21) in der Maschine derart angeordnet ist, daß das elastische Element (21) in der Transportlage der Maschine vorgespannt ist.

15. Landwirtschaftliche Maschine nach einem der vorhergehenden Ansprüche,
**dadurch gekennzeichnet, daß** die Spannung des elastischen Elementes (21) in der Arbeitslage der Maschine größer ist als seine Spannung in deren Transportlage.

16. Landwirtschaftliche Maschine nach einem der vorhergehenden Ansprüche,
**dadurch gekennzeichnet, daß** die beiden Enden des Betätigungselementes (14) mit einer jeweiligen Zug- und Druckstange (17) verbunden sind.

## Revendications

1. Machine agricole, en particulier une faneuse, ayant un châssis allongé (1), comprenant au moins une première, une deuxième et une troisième parties de châssis (3, 5, 7), la première partie de châssis (3) étant interconnectée de manière pivotante avec la deuxième partie de châssis (5) au moyen d'un axe de pivot (4), la deuxième partie de châssis (5) étant interconnectée de manière pivotante avec la troisième partie de châssis (7) par l'intermédiaire d'un axe de pivot (6), lesdits axes de pivot étant agencés dans la direction de déplacement de la machine agricole, ladite deuxième partie de châssis (5) étant placée entre la première partie de châssis (3) et la troisième partie de châssis (7), ladite troisième partie de châssis (7) pouvant pivoter par rapport à au moins la première partie de châssis (3) au moyen d'un organe opérationnel (14, 15, 16, 17) inclus dans la machine sensiblement dans la direction longitudinale du châssis (1), lequel organe opérationnel (14, 15, 16, 17) comprend un élément opérationnel (14) qui vient en prise de manière pivotante avec la deuxième partie de châssis (5), ledit organe opérationnel (14, 15, 16, 17), par l'intermédiaire d'un raccordement (19, 20), vient en prise de manière pivotante avec la troisième partie de châssis (7) et un élément élastique (21) étant relié entre le châssis (1) et l'élément opérationnel (14, 15, 16, 17), **caractérisée en ce que** l'élément opérationnel (14 à 17) comprend une tige du type tire-pousse (17) qui est accouplée à l'élément opérationnel (14) par l'intermédiaire d'un bras (15, 16) qui est relié de manière pivotante à la deuxième partie de châssis (5), ladite tige du type tire-pousse (17), par l'intermédiaire du raccordement (19, 20), vient en prise de manière pivotante avec la troisième partie de châssis (7).

2. Machine agricole selon la revendication 1, **caractérisée en ce que** le châssis (1) est muni, aux deux extrémités de la première partie de châssis (3), d'une deuxième (5) et d'une troisième (7) parties de châssis.

3. Machine agricole selon la revendication 1 ou 2, **caractérisée en ce que** l'élément opérationnel (14) s'étend à une certaine distance au-dessus de la première partie de châssis (3) et sensiblement parallèlement à celle-ci.

4. Machine agricole selon la revendication 1, 2 ou 3, **caractérisée en ce qu'**une extrémité de l'élément opérationnel (14) est reliée de manière pivotante à un bras (15) qui est également relié de manière pivotante à une deuxième partie de châssis (5), et l'autre extrémité de l'élément opérationnel (14) est reliée de manière pivotante à un bras (16) qui est également relié de manière pivotante à la deuxième partie de châssis (5) opposée.

5. Machine agricole selon l'une quelconque des revendications précédentes,
**caractérisée en ce que** l'élément élastique (21) se compose d'un ressort de tension.

6. Machine agricole selon l'une quelconque des revendications précédentes,
**caractérisée en ce que** l'élément élastique (21) est disposé de telle manière à être actif entre une deuxième partie de châssis (5) et l'élément opérationnel (14, 15, 16, 17).

7. Machine agricole selon l'une quelconque des revendications précédentes,
**caractérisée en ce que** le raccordement (19, 20) est mis en oeuvre par un orifice à fentes (19) et un élément de raccordement (20) passé à travers.

8. Machine agricole selon l'une quelconque des revendications précédentes,
**caractérisée en ce que** chaque partie de châssis (3, 5, 7) de la machine est munie d'au moins un élément de fanage (2) pouvant être entraîné autour d'un arbre orienté vers le haut.

9. Machine agricole selon la revendication 7, **caractérisée en ce que**, à l'aide d'un support (18) ajusté sur la troisième partie de châssis (1), l'orifice à fentes (19), vu dans la direction longitudinale depuis le châssis (1) et depuis la première partie de châssis (3), est disposé au moins sensiblement au-delà de l'axe de pivot (6) situé entre la deuxième (5) et la troisième (7) parties de châssis et à une certaine distance au-dessus de celles-ci.

10. Machine agricole selon l'une quelconque des revendications précédentes, **caractérisée en ce que** les parties de châssis immédiatement interconnectées de manière pivotante (3, 5 ; 5, 7) pivotent les unes par rapport aux autre au moyen de butées (8, 23, 36), au moins de telle sorte que, dans la position de transport de la machine, les parties de châssis (3 à 5) forment au moins la moitié d'un pentacle.

11. Machine agricole selon l'une quelconque des revendications précédentes, **caractérisée en ce que** la tige du type tire-pousse (17) comprend une partie d'extrémité (20), constituant l'élément de raccordement, qui est incurvée à angle droit par rapport à sa direction longitudinale, laquelle partie d'extrémité (20) est mise en prise par l'élément élastique (21).

12. Machine agricole selon l'une quelconque des revendications précédentes, **caractérisée en ce que** le ressort de tension (21), au moins dans la position opérationnelle de la machine, possède une composante directionnelle prédominante située dans la direction longitudinale de la tige du type tire-pousse (17).

13. Machine agricole selon l'une quelconque des revendications précédentes, **caractérisée en ce que** l'élément élastique (21) est disposé au moyen d'un élément de raccordement (34) qui est réglable en longueur.

14. Machine agricole selon l'une quelconque des revendications précédentes, **caractérisée en ce que** l'élément élastique (21) est inclus dans la machine de telle sorte que, dans la position de transport de la machine, ledit élément élastique (21) présente une prétension.

15. Machine agricole selon l'une quelconque des revendications précédentes, **caractérisée en ce que** la tension de l'élément élastique (21) dans la position opérationnelle de la machine est supérieure à sa tension dans sa position de transport.

16. Machine agricole selon l'une quelconque des revendications précédentes, **caractérisée en ce que** les deux extrémités de l'élément opérationnel (14) sont reliées à une tige du type tire-pousse (17) respective.
